# EUROPÄISCHE PATENTSCHRIFT

(11) **EP 1 342 209 B1**
(45) Veröffentlichungstag und Bekanntmachung des Hinweises auf die Patenterteilung: **28.04.2004**
(21) Anmeldenummer: 01999918.4
(22) Anmeldetag: 15.11.2001
(51) Int. Cl.: G06K 19/073, G07F 7/10, G07F 7/02

(54) **VERFAHREN ZUR ENTWERTUNG EINES DATENTRÄGERS**
A METHOD FOR CANCELLING INFORMATION IN A DATA CARRIER
PROCEDE POUR L'ANNULATION D'UN SUPPORT INFORMATIQUE

(30) Priorität: 07.12.2000 DE 10060912
(43) Veröffentlichungstag der Anmeldung: 10.09.2003
(73) Patentinhaber: Infineon Technologies AG, 81669 München (DE)
(72) Erfinder: STADLER, Martin, 81541 München (DE); WEDEL, Armin, 86415 Mering (DE)
(74) Vertreter: Epping Hermann & Fischer
(86) Internationale Anmeldenummer: PCT/DE2001/004310
(87) Internationale Veröffentlichungsnummer: WO 2002/047024

(56) Entgegenhaltungen:
- EP-A- 0 406 841
- WO-A-99/64996
- DE-A- 19 757 037
- DE-A- 19 816 541
- US-A- 5 509 073
- US-A- 5 648 647
- US-A- 5 715 431

## Beschreibung

Die Erfindung betrifft einen Datenträger sowie ein Verfahren zur Entwertung von Informationen, die in einer integrierten Schaltung eines Datenträgers gespeichert sind.

Datenträger, zum Beispiel Chipkarten, die eine Geldbörsenfunktion beinhalten, oder Zutrittsausweise, sollten aus Sicherheitsgründen regelmäßig durch Datenträger neuerer Generationen ersetzt werden. Aus diesem Grund ist es sinnvoll, diese Datenträger von Haus aus mit einer nur begrenzten Gültigkeitsdauer zu versehen.

Im Falle einer Chipkarte, die eine Geldbörsenfunktion beinhaltet, kann dabei der Fall eintreten, daß sich auf dem Datenträger nach Ablauf der Gültigkeit noch ein Restbetrag, der als Information in einer integrierten Schaltung gespeichert ist, befindet. Um dem Nutzer diesen Betrag gutschreiben zu können, besteht zur Zeit lediglich die Möglichkeit, die Gutschrift manuell auszuführen. Der Restbetrag kann dabei entweder einem Konto gutgeschrieben oder auf einen neuen Datenträger eingespeichert werden. Insgesamt ist dieses Vorgehen aufwendig und unwirtschaftlich.

Aus dem Stand der Technik sind lediglich Verfahren bekannt, bei denen eine einen Geldbetrag repräsentierende Information eines Datenträgers durch ein Lesegerät, zum Beispiel ein Kartentelefon, verändert wird. Das Rückspeichern des nach einem Telefonat verbleibenden Restbetrages wird nach mehreren gegenseitigen Authentifikationsvorgängen durchgeführt. Ein derartiges Verfahren sowie eine Vorrichtung zur Durchführung dieses Verfahrens ist beispielsweise aus der WO 89/02140 bekannt.

Nachteilig ist dort, daß der Datenträger nicht gegen eine Manipulation geschützt ist, so daß die den Geldbetrag repräsentierende Information in dem Datenträger mißbräuchlich wiederholt auf einen Ausgangswert gebracht werden kann.In einem derartigen Fall ist es auch denkbar, daß eine eventuell vorgegebene Gültigkeitsgrenze manipuliert werden kann.

DE 19757037 offenbart ein Verfahren gemäß den Merkmalen des Oberbegriffes von Anspruch 1.

Die Aufgabe der vorliegenden Erfindung besteht deshalb darin, ein Verfahren zur Entwertung eines Datenträger anzugeben, das einen hohen Schutz vor Manipulation bietet.

Diese Aufgabe wird mit einem Verfahren gemäß Patentanspruch 1 gelöst.

Bevorzugte Ausgestaltungen ergeben sich aus den jeweiligen untergeordneten Patentansprüchen.

Das erfindungsgemäße Verfahren zur Entwertung von Informationen, die in einer integrierten Schaltung eines Datenträgers gespeichert sind, enthält die nachfolgenden Schritte:
a) Durchführen einer ersten Authentifikation zwischen dem Datenträger und einem Lesegerät,
b) Auslesen der Informationen aus dem Datenträger,
c) Zwischenspeichern der Informationen in dem Lesegerät,
d) Unbrauchbarmachen der integrierten Schaltung,
e) Durchführen einer zweiten Authentifikation zwischen dem Datenträger und dem Lesegerät unter Berücksichtigung der Ereignisse des Unbrauchbarmachens der integrierten Schaltung, um zu überprüfen, ob das Unbrauchbarmachen der integrierten Schaltung erfolgreich war oder nicht.

Die Erfindung schlägt folglich vor, nach dem Zwischenspeichern der Informationen in dem Lesegerät die integrierte Schaltung des Datenträgers unbrauchbar zu machen. Unter dem Begriff "Unbrauchbarmachen" wird hierbei verstanden, daß die bestimmungsgemäße Funktionalität nach diesem Verfahrensschritt nicht mehr möglich ist. Insbesondere werden dabei die Teile der integrierten Schaltung deaktiviert oder zerstört, die zum Beispiel die Geldbörsenfunktion oder eine Zugriffskontrolle beinhalten und steuern. Um einen möglichst effektiven Schutz vor einer Manipulation bereitstellen zu können, sollte das Unbrauchbarmachen irreversibel sein.

Mit dem Schritt des Durchführens einer zweiten Authentifikation zwischen dem Datenträger und dem Lesegerät wird dabei überprüft, ob der gewollte Zerstörungsmechanismus der integrierten Schaltung erfolgreich war oder nicht. Im Falle eines Mißerfolges, besteht dann die Möglichkeit, das Unbrauchbarmachen der integrierten Schaltung zu wiederholen oder aber über das Lesegerät die Funktionsfähigkeit der Karte zu signalisieren. Mittels der zweiten Authentifikation kann somit zweifelsfrei festgestellt werden, ob der Datenträger bereits entwertet wurde oder nicht.

In einer bevorzugten Ausgestaltung des erfindungsgemäßen Verfahrens wird zwischen Schritt c) und d) der Schritt - Entwertung der Informationen in dem Datenträger durchgeführt.

Um eine zusätzliche Sicherheit zu bieten, sieht die Erfindung folglich vor, zusätzlich zu dem Unbrauchbarmachen der integrierten Schaltung die Informationen in dem Datenträger zu entwerten. Das Entwerten kann dabei ein einfaches Löschen oder das Einspeichern einer vorgegebenen Bitfolge sein.

Der Schritt des Unbrauchbarmachens der integrierten Schaltung umfaßt in einer ersten Variante das Durchbrennen einer Sicherung. Die Sicherung kann dabei zum Beispiel als "Tox Fuse" ausgeführt sein. Hierbei handelt es sich um einen Transistor, der ein dünnes Tunneloxid aufweist. Beim Anlegen einer Hochspannung wird dieses zerstört. Bei einer bestimmungsgemäßen Funktion der integrierten Schaltung nimmt die Fuse einen funktionswichtigen Teil ein. Nach dem Durchbrennen dieses Bauelementes ist die Funktionalität der integrierten Schaltung nicht mehr gegeben, also unbrauchbar. Das Durchbrennen einer derartigen Sicherung ist dabei irreversibel.

Alternativ kann der Schritt des Unbrauchbarmachen der integrierten Schaltung die Programmierung einer nicht-flüchtigen Speicherzelle, z.B. mit einem Flagbit, Flagbits umfassen. Hierzu muß die integrierte Schaltung zumindest eine nicht-flüchtige Speicherzelle beinhalten, deren Inhalt bestimmt, ob die integrierte Schaltung oder ein darin befindliches Programm die bestimmungsgemäße Funktion ausführen kann oder nicht. Dadurch, daß die Speicherzelle nicht-flüchtig ist, ist zum Beispiel nach dem Setzen des Flag-Bits ein irreversibler Zustand hergestellt, wodurch die integrierte Schaltung im Gesamten oder Teile davon nicht mehr funktionsfähig sind.

Zweckmäßigerweise wird zumindest die erste Authentifikation unter Verwendung eines geheimen Schlüssels durchgeführt, wobei als Parameter des geheimen Schlüssels die in der integrierten Schaltung des Datenträgers gespeicherten Informationen einfließen. Der geheime Schlüssel ist vorzugsweise auf dem Datenträger gespeichert. Die Nachbildung des Schlüssel wird dadurch erschwert, daß die von Datenträger zu Datenträger oder Anwendung zu Anwendung unterschiedlichen Informationen des Datenträgers in die Schlüsselbildung einfließen.

Vorzugsweise wird gleichzeitig mit dem Unbrauchbarmachen der integrierten Schaltung der geheime Schlüssel in dem Datenträger gelöscht. Da dieser für eine erfolgreiche Authentifikation zwischen dem Datenträger und dem Lesegerät zwingend notwendig ist, ist hierdurch sichergestellt, daß eine weitere Verwendung des Datenträgers unmöglich ist.

Denkbar wäre auch, mit Unbrauchbarmachen der integrierten Schaltung nur das Auslesen des Schlüssel zu verhindern. Der Schlüssel wäre dann zwar weiterhin in der integrierten Schaltung gespeichert, wobei die Informationen jedoch nicht mehr gelesen werden könnten.

Eine weitere Erhöhung der Sicherheit ergibt sich dadurch, daß die zweite Authentifikation unter Berücksichtigung der Ergebnisse der ersten Authentifikation durchgeführt wird. Durch diese Verkettung der Authentifikationen könnte beispielsweise registriert werden, wenn der Datenträger nach der ersten Authentifikation von dem Lesegerät getrennt und durch einen anderen ersetzt würde.

Vorzugsweise erfolgt die zweite Authentifikation unter Berücksichtigung des Zustandes der Sicherung oder des nicht-flüchtigen Flag-Bits. Diese Ereignisse können als Parameter in einen Schlüssel einfließen, der bei der zweiten Authentifikation verwendet wird. Es kann somit in jedem Fall festgestellt werden, ob die Entwertung des Datenträgers erfolgreich war oder nicht.

In einer weiteren Ausgestaltung der Erfindung erfolgt bei erfolgreicher zweiter Authentifikation ein Speichern der in dem Lesegerät zwischengespeicherten Informationen auf einem Datenträger. Sofern der Datenträger Zugriffskontrollinformationen beinhaltet, wie zum Beispiel persönliche Daten des Benutzers, so können diese auf den weiteren Datenträger übertragen werden, ohne daß eine erneute Eingabe aller Daten notwendig ist. Im Falle einer Geldbörsenfunktion kann der Restbetrag auf den weiteren Datenträger oder alternativ einem Konto gutgeschrieben werden.

Der Datenträger weist eine integrierte Schaltung auf, die Informationen beinhaltet, wobei diese Informationen durch ein Lesegerät auslesbar sind. Erfindungsgemäß ist ein Zerstörungsmittel vorgesehen, das durch das Lesegerät aktivierbar ist.

Das Auslesen der Informationen kann dabei auf kontaktlose oder kontaktbehaftete Weise erfolgen. Entsprechend der verwendeten Technik muß der Datenträger dann eine Antenne oder mit der integrierten Schaltung verbundene Kontakte oder gegebenenfalls beides aufweisen.

Nach der Aktivierung des Zerstörungsmittels ist kein bestimmungsgemäßer Gebrauch des Datenträgers beziehungsweise der integrierten Schaltung oder wesentlicher Teile davon mehr möglich.

Die Aktivierung des Zerstörungsmittels wird ausschließlich durch das Lesegerät veranlaßt. Dies geschieht nur dann, wie bereits oben beschrieben, wenn eine erfolgreiche (erste) Authentifikation zwischen dem Datenträger und dem Lesegerät erfolgt ist.

Vorzugsweise ist das Zerstörungsmittel eine Sicherung oder zumindest eine nicht-flüchtige Speicherzelle. Beiden Varianten ist gemeinsam, daß nach ihrer Aktivierung ein irreversibler Zustand erreicht ist, der lediglich durch eine Änderung des Designs der integrierten Schaltung umgangen werden könnte. Der erforderliche Aufwand ist jedoch so hoch, daß eine Manipulation unattraktiv ist. Nicht rekonstruierbar ist hingegen das Löschen des auf dem Datenträger gespeicherten Schlüssels.

Anhand der nachfolgenden Figur wird die Erfindung sowie deren Vorteile weiter erläutert.

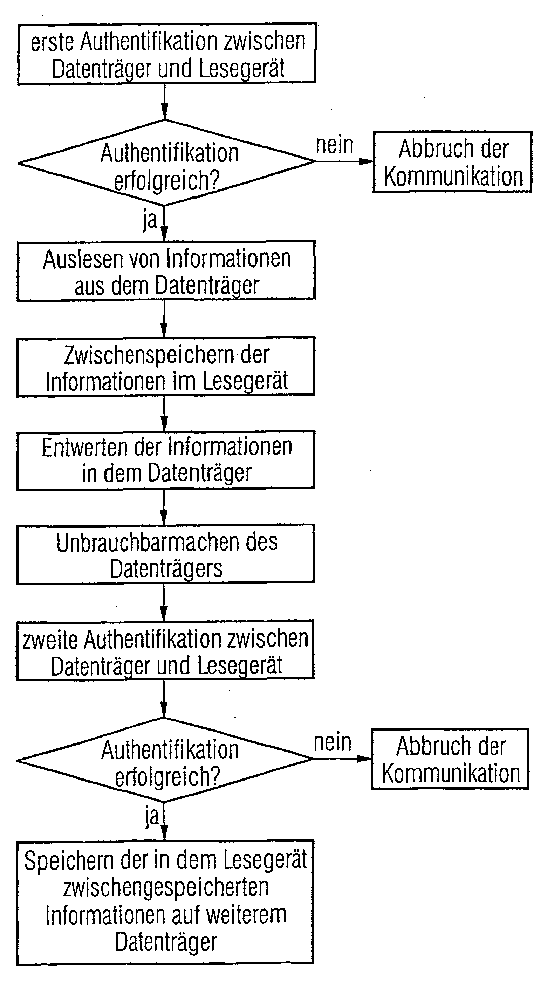

Figur 1 zeigt den schematischen Ablauf des erfindungsgemäßen Verfahrens zur Entwertung eines Datenträgers.

Im ersten Schritt wird eine erste Authentifikation durchgeführt, anhand der die Echtheit des Datenträgers sowie die Echtheit einer Information in einer integrierten Schaltung des Datenträgers überprüft wird. In diese erste Authentifikation geht bevorzugt ein geheimer Schlüssel ein, der in dem Datenträger gespeichert ist. Die in der integrierten Schaltung des Datenträgers gespeicherte Information kann dabei als Parameter in den Schlüssel einfließen. Dabei wird ein vom Schlüssel des Datenträgers abhängiger Wert flüchtig auf diesem gespeichert. Dieser Wert ist somit von einem Datenträgerindividuellen Schlüssel abhängig.

Bei einer erfolgreichen ersten Authentifikation werden die Informationen von dem Lesegerät aus dem Datenträger ausgelesen und in diesem zwischengespeichert. Anschließend werden die Informationen, die in der integrierten Schaltung des Datenträgers gespeichert waren, entwertet. Dies kann beispielsweise durch Löschen oder durch das Beschreiben mit einem vorgegebenen Wert geschehen. Die Entwertung ist zur Erzielung einer hohen Manipulationssicherheit sinnvoll, aber nicht zwangsläufig notwendig.

Im nächsten Schritt wird der Datenträger, das heißt die integrierte Schaltung im Gesamten oder Teile davon unbrauchbar gemacht. Dies kann beispielsweise durch das Aktivieren, d.h. Brennen einer Sicherung, einer Fuse geschehen. Parallel dazu kann, muß aber nicht, im Speicher der Schlüssel für die erste Authentifikation gelöscht werden. Somit ist in jedem Fall sichergestellt, daß der Datenträger zukünftig unbrauchbar ist. Denkbar ist auch, daß durch das Brennen der Sicherung weitere Funktionen der integrierten Schaltung blockiert werden.

Alternativ kann statt der Sicherung zumindest eine nicht-flüchtige Speicherzelle verwendet werden, deren Inhalt für die Funktion der integrierten Schaltung maßgeblich ist. Es ist ausreichend, lediglich eine einzige Speicherzelle zu verwenden, so daß ein "Flag" abgefragt werden kann.

Im nächsten Schritt wird eine zweite Authentifikation durchgeführt, die vorzugsweise mit dem Ergebnis der ersten Authentifikation verknüpft ist. Zusätzlich ist es vorteilhaft, wenn in die zweite Authentifikation als Parameter ein Wert eingeht, der vom Zustand der Sicherung oder der zumindest einen nicht-flüchtigen Speicherzelle abhängt.

Erst wenn bei der zweiten Authentifikation das erwartete Ergebnis durch die Leseeinrichtung verifiziert wurde, gilt die Entwertung als erfolgreich. In diesem Falle können die in dem Lesegerät zwischengespeicherten Informationen auf einen neuen Datenträger oder dergleichen weiter transferiert werden.

Durch dieses Verfahren ist sichergestellt, daß der alte Datenträger unbrauchbar und auch bezüglich eines Ausspähens des auf dem Datenträger gespeicherten Schlüssels unattraktiv ist. Sofern es sich um einen Datenträger mit Geldbörsenfunktion handelt, wird sichergestellt, daß entwertete Karten nicht wieder aufgeladen könnten.

## Patentansprüche

1. Verfahren zur Entwertung eines Datenträgers, der Informationen in einer integrierten Schaltung gespeichert hat, mit den folgenden Schritten:
a) Durchführen einer ersten Authentifikation zwischen dem Datenträger und einem Lesegerät,
b) Auslesen der Informationen aus dem Datenträger,
c) Zwischenspeichern der Informationen in dem Lesegerät,
d) Unbrauchbarmachen der integrierten Schaltung, **gekennzeichnet durch** den Schritt:
e) Durchführen einer zweiten Authentifikation zwischen dem Datenträger und dem Lesegerät unter Berücksichtigung der Ereignisse des Unbrauchbarmachens der integrierten Schaltung, um zu überprüfen, ob das Unbrauchbarmachen der integrierten Schaltung erfolgreich war oder nicht.

2. Verfahren nach Anspruch 1,
**dadurch gekennzeichnet, daß**
zwischen Schritt c) und d) der Schritt
- Entwertung der Informationen in dem Datenträger durchgeführt wird.

3. Verfahren nach Anspruch 1 oder 2,
**dadurch gekennzeichnet, daß**
der Schritt des Unbrauchbarmachens der integrierten Schaltung das Durchbrennen einer Sicherung umfaßt.

4. Verfahren nach Anspruch 1 oder 2,
**dadurch gekennzeichnet, daß**
der Schritt des Unbrauchbarmachens der integrierten Schaltung die Programmierung zumindest einer nicht-flüchtigen Speicherzelle umfaßt.

5. Verfahren nach einem der vorhergehenden Ansprüche,
**dadurch gekennzeichnet, daß**
zumindest die erste Authentifikation unter Verwendung eines geheimen Schlüssels durchgeführt wird, wobei als Parameter die in der integrierten Schaltung des Datenträgers gespeicherten Informationen einfließen.

6. Verfahren nach Anspruch 5,
**dadurch gekennzeichnet, daß**
gleichzeitig mit Schritt d) der geheime Schlüssel gelöscht wird.

7. Verfahren nach einem der vorhergehenden Ansprüche,
**dadurch gekennzeichnet, daß**
die zweite Authentifikation unter Berücksichtigung der Ergebnisse der ersten Authentifikation durchgeführt wird.

8. Verfahren nach einem der vorhergehenden Ansprüche,
**dadurch gekennzeichnet, daß**
die zweite Authentifikation unter Berücksichtigung des Zustandes der Sicherung oder der zumindest einen nicht-flüchtigen Speicherzelle erfolgt.

9. Verfahren nach einem der vorhergehenden Ansprüche,
**dadurch gekennzeichnet, daß**
bei erfolgreicher zweiter Authentifikation ein Speichern der in dem Lesegerät zwischengespeicherten Informationen auf einem weiteren Datenträger erfolgt.

## Claims

1. Method for invalidating a data medium which has stored information in an integrated circuit, having the following steps:
a) a first authentication operation is carried out between the data medium and a reader,
b) the information is read from the data medium,
c) the information is buffer-stored in the reader,
d) the integrated circuit is rendered unusable,
**characterized by** the step:
e) a second authentication operation is carried out between the data medium and the reader taking into account the events involved in the operation of rendering the integrated circuit unusable in order to check whether or not the operation of rendering the integrated circuit unusable was successful.

2. Method according to Claim 1,
**characterized in that**
the following step is carried out between steps c) and d) :
- the information in the data medium is invalidated.

3. Method according to Claim 1 or 2,
**characterized in that**
the step of rendering the integrated circuit unusable comprises blowing a fuse.

4. Method according to Claim 1 or 2,
**characterized in that**
the step of rendering the integrated circuit unusable comprises programming at least one non-volatile memory cell.

5. Method according to one of the preceding claims,
**characterized in that**
at least the first authentication operation is carried out using a secret key, with the information stored in the integrated circuit on the data medium being input as parameters.

6. Method according to Claim 5,
**characterized in that**
the secret key is deleted simultaneously with step d) .

7. Method according to one of the preceding claims,
**characterized in that**
the second authentication operation is carried out taking into account the results of the first authentication operation.

8. Method according to one of the preceding claims,
**characterized in that**
the second authentication operation is effected taking into account the state of the fuse or of the at least one non-volatile memory cell.

9. Method according to one of the preceding claims,
**characterized in that**,
if the second authentication operation is successful, the information buffer-stored in the reader is stored on a further data medium.

## Revendications

1. Procédé d'annulation d'un support de données, qui a mémorisé des informations dans un circuit intégré, comprenant les stades suivants :
a) on effectue une première authentification entre le support de données et un appareil de lecture ;
b) on lit les informations dans le support de données ;
c) on mémorise de manière intermédiaire les informations dans l'appareil de lecture ;
d) on met hors d'usage le circuit intégré, **caractérisé en ce que**
e) on effectue une deuxième authentification entre le support de données et l'appareil de lecture en tenant compte des événements de la mise hors d'usage du circuit intégré pour vérifier si la mise hors d'usage du circuit intégré a réussi ou n'a pas réussi.

2. Procédé suivant la revendication 1, **caractérisé en ce que** l'on effectue entre le stade c) et le stade d) le stade dans lequel
- on annule les informations dans le support de données.

3. Procédé suivant la revendication 1 ou 2, **caractérisé en ce que** le stade de mise hors d'usage du circuit intégré comprend la fusion d'un fusible.

4. Procédé suivant la revendication 1 ou 2, **caractérisé en ce que** le stade de mise hors d'usage du circuit intégré comprend la programmation de au moins une cellule de mémoire non volatile.

5. Procédé suivant l'une des revendications précédentes, **caractérisé en ce que** l'on effectue au moins la première authentification en utilisant une clé secrète en entrant comme paramètres les informations mémorisées dans le circuit intégré du support de données.

6. Procédé suivant la revendication 5, **caractérisé en ce qu'**en même temps que l'on effectue le stade d) on efface la clé secrète.

7. Procédé suivant l'une des revendications précédentes, **caractérisé en ce que** l'on effectue la deuxième authentification en tenant compte des résultats de la première authentification.

8. Procédé suivant l'une des revendications précédentes, **caractérisé en ce que** l'on effectue la deuxième authentification en tenant compte de l'état du fusible ou de la au moins une cellule de mémoire non volatile.

9. Procédé suivant l'une des revendications précédentes, **caractérisé en ce que**, lorsque la deuxième authentification a réussi, on effectue sur un autre support de données une mémorisation des informations mémorisées intermédiairement dans l'appareil de lecture.
